# EUROPEAN PATENT SPECIFICATION

(11) **EP 1 161 117 B1**
(45) Date of publication and mention of the grant of the patent: **12.04.2006**
(21) Application number: 01304694.1
(22) Date of filing: 29.05.2001
(51) Int. Cl.: H04Q 11/00

(54) **Photonic network node**
Optischer Netzwerkknoten
Noeud de réseau optique

(30) Priority: 30.05.2000 CA 2310293
(43) Date of publication of application: 05.12.2001
(73) Proprietor: Nortel Networks Limited, St.Laurent, Quebec H4S 2A9 (CA)
(72) Inventor: Graves, Alan F., Kanata, Ontario K2M 1N7 (CA); Gruber, John G., Orleans, Ontario K1C 2G1 (CA)
(74) Representative: Ertl, Nicholas Justin

(56) References cited:
- EP-A- 0 813 349
- EP-A- 0 964 487
- CHU KWANG-UK ET AL: "Scalable optical-path supervisory scheme using pilot tones and channel equalisers" ELECTRONICS LETTERS, IEE STEVENAGE, GB, vol. 36, no. 9, 27 April 2000 (2000-04-27), pages 817-818, XP006015153 ISSN: 0013-5194
- WILLNER A E: "TOWARDS UNIFORM CHANNEL PERFORMANCE IN DYNAMIC WDM SYSTEMS AND NETWORKS" OFC/IOOC '99 OPTICAL FIBER COMMUNICATION CONFERENCE / INTERNATIONAL CONFERENCE ON INTEGRATED OPTICS AND OPTICAL FIBER COMMUNICATION. SAN DIEGO, CA, FEB. 21 - 26, 1999, OPTICAL FIBER COMMUNICATION CONFERENCE / INTERNATIONAL CONFERENCE ON INTEGRATED OP, 21 February 1999 (1999-02-21), pages THO5-1-THO5-3, XP000967036 ISBN: 0-7803-5430-3

## Description

The present invention relates generally to nodes for directly switching optical signals in photonic networks.

Today multi-vendor and multi-carrier interworking in hub and point-of-presence (POP) sites is via open electrical interfaces (e.g., DS3 signals) in the electrical world, and by open optical interfaces (e.g., 1310nm signals) in the optical world. In either case, this requires the relatively costly translation from optical-to-electrical-to-optical (O/E/O). This is necessary to date, given the complex nature of optical line and switching technologies, and the further complexity that would arise from interactions among them if optically interconnected without O/E/O conversion. For instance, optical line systems are complex by virtue of pushing the technology envelopes for simultaneous - high capacity, long-reach, performance, and low cost per bit. Similarly, photonic switches are struggling to achieve scalability, low loss and manageability. For these reasons of complexity and the need to control impairment and transient interactions, and facilitate interworking, these systems are currently being designed in 'isolation' - that is in a single vendor manner, and will likely be initially deployed in 'isolation' - that is with O/E/Os between them.

However, in the context of migrating to all-optical networks, it is desirable to eventually be able to more economically facilitate multi-vendor and multi-carrier interworking by optical means and without O/E/O conversion. Going forward, technology maturity will somewhat ease these interactions and inter-working difficulties. But, more relevant here is the prospect that these issues can be further mitigated by way of the photonic node taking on the role of a gateway function for multi-vendor and multi-carrier interworking. The basis of this gateway function is the photonic node as 'master' performance monitor and impairment compensator. Performance monitoring in a photonic node supports network wide performance and fault management, and the triggering of network wide protection and restoration options. It also supports detection and isolation of photonic node specific faults and miss-connects, triggering protection switching to redundant modules where applicable. Finally, and most relevant here, performance monitoring drives photonic node output channel power level compensation, and potentially, dispersion compensation. This compensation facilitates a common, transparent, 'zero-impairment', optical gateway space capable of concatenating multi-vendor line systems, and interconnecting multi-carrier networks. A photonic node can also interface with electro-optics. For example, when a photonic system is in close proximity to electro-optics systems, network and node monitoring of optical channels can be at least partly done by electro-optic systems.

The article "Scalable optical-path supervisory scheme using pilot tones and channel equalisers" by Kwang-Uk Chu et al, Electronics Letters 27 April 2000, vol. 36 No. 9, discloses a system in which pilot tones are removed by channel equalisers, in order to improve the scalability of the supervisory scheme.

According to the invention, there is provided a photonic network node comprising: a photonic switch fabric including a main module and one or more redundant modules, for forwarding an optical signal comprising a plurality of channels; means for monitoring the optical signal before and after the photonic switch fabric; means for switching the plurality of channels of the optical signal between the main module and one of the redundant modules, responsive to the monitoring means; means for reducing a variance of signal impairments existing between input optical signals of the photonic network node, by applying a bulk compensation of signal characteristics to all channels of the optical signal; means for demultiplexing an optical signal inputs into channels; means for compensating channel impairment for each individual channel, responsive to the monitoring means; and means for multiplexing channels into an output optical signal.

This provides an improved photonic network node.

The main photonic switching and cross connect (PSX) application is for connection management and control of end-to-end wavelength services in long-haul all-optical networks, for which PSXs provide the most value but must compensate for loss impairments and switching transient interactions between PSX nodes and optical line systems.

PSX sizing requirements range from tens, hundreds, and thousands of ports for fiber, band, and wavelength granular fabrics, respectively, where for example, mid-size band switches may best apply in pass-thru intensive infra-network hub sites, and large wavelength switches may best apply in add/drop intensive inter-network POP sites. Another key PSX requirement is for multi-purpose performance monitoring for network wide and nodal performance and fault management, triggering protection and restoration options, and driving PSX loss compensation.

Other aspects of the invention include combinations and subcombinations of the features described above other than the combinations described above.

Examples of the invention will now be described in detail with reference to the accompanying drawings, in which:
Fig. 1 is a functional block diagram of an photonic network having nodes in accordance with an embodiment of the present invention;
Fig. 2 is a functional block diagram of a photonic node in accordance with an embodiment of the present invention; and
Fig. 3 is a functional block diagram, illustrating a network node transitioning from an all electrical domain to an all optical domain.

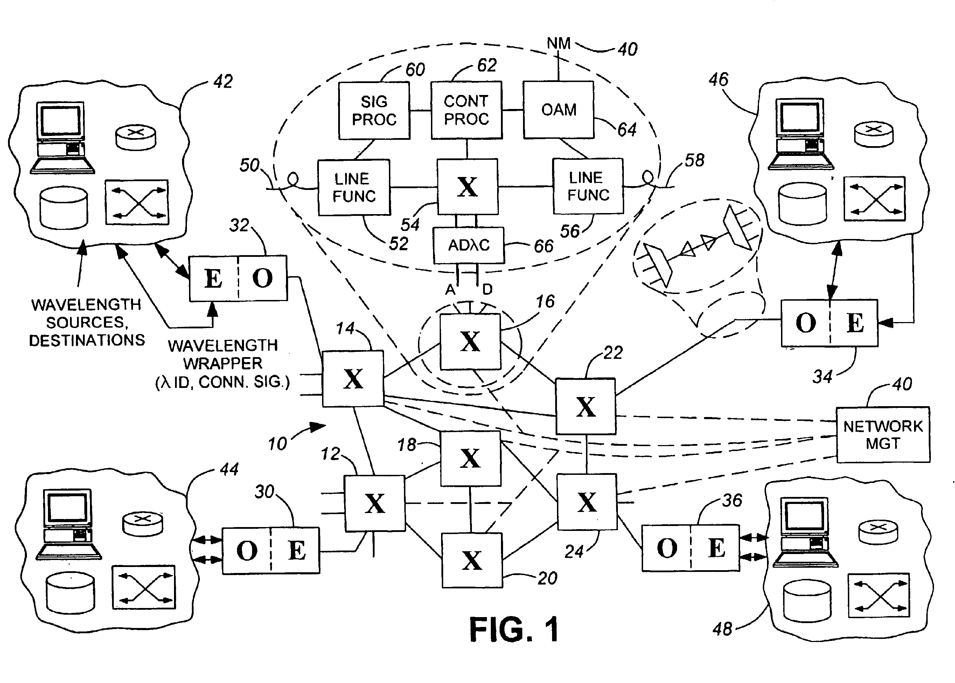

Fig. 1 is a functional block diagram illustrating a photonic network 10. The photonic network 10 includes a plurality of photonic nodes 12, 14, 16, 18, 20, 22, and 24 interconnect by optical fibers. Electro-Optical devices 30, 32, 34, and 36 provide access to the photonic network from electrical signal networks. Operation of the network is facilitated by network management 40.

The electro-optical devices 30-36 provide access to the photonic network for collector networks 42, 44, 46, and 48.

Node 16 is shown in greater detail, coupled to fiber 50, and having input line function 52, photonic switch fabric 54, output line function 56, coupled to fiber 58. Also included are a signal processor 60, content processor 62, and OA&M 64 interconnected as shown in the figure. An analog, digital lambda (wavelength) converter 66 provides for add/drop, wavelength conversion and electronic cross-connect functions.

Nodes 12 - 24 of photonic network 10 provide the following roles: monitoring, compensating, providing a central point for OAM&P, inter-working with optical line systems, concatenating multi-vendor optical line systems, gatewaying for multi-vendor line systems, inter-working with electro-optics and interfacing to legacy networks. These networks have channel associated overhead options providing for different roles. For example, fast digital wrappers, mainly for end-end channels and provisioning; signal quality and trace capabilities; slow digital wrapper - for end-end channels and intermediate sites provisioning; signal quality, trace and fault location capabilities; and optical pilot tones with ID for trace. These options also support monitoring for node integrity checks and redundancy switching; node and link impairment compensation, network protection and restoration; and informing control layer of optical layer status to facilitate connection setup.

Operation will now be described with reference to Figure 1 showing a high level view of a photonic network. It includes collector networks or access networks 42-48 which handle the sub-wavelength aggregation into wavelength level traffic, the wavelength - level traffic emerging at the trunk ports of a router, for instance. The wavelength level traffic, whether it be aggregated traffic from a router or switch or whether it be a longer-term or higher bandwidth service directly fed to/from an end user, is encapsulated in a wavelength wrapper, for example at electro-optical device 32, or a similar solution to allow a reliable end-to-end path to be established. The purposes that the wavelength wrapper (a wavelength-level overhead channel added to the payload) may provide include:
- End-to-end connectivity check.
- Wavelength routing information.
- Intermediate node routing info.
- Quality/class-of-service indicators.
- Methods for validating the signal integrity at intermediate nodes, integrity being defined as both quality and correct routing.
- Others

The wavelengths, each containing the wrapped traffic and the lambda wrapper, are then multiplexed in an optical Wavelength Division Multiplexer (WDM), not shown in Fig. 1, to produce a multi-carrier optical signal, each carrier operating at its own wavelength and carrying its own information. This WDM optical signal is transmitted via fiber, to the required end destination, for example access network 46, where the wavelength is demultiplexed from the WDM stream and the wavelength wrapper is processed to carry out the necessary functions implied by the above list of potential functions. This includes verification that the correct wavelength and hence payload has been received and that the quality of the transmission path is adequate.

The individual wavelength finds its way to the required end destination by establishing end-to-end optical paths at the wavelength level by a process of concatenating individual optical spans. This is achieved by use of photonic switches (14, 18, 24) which cross-connect individual wavelengths from any given input span to the appropriate output spans on a wavelength-by-wavelength or alternatively wavelength group-by-wavelength group basis.

This requires that the WDM optical signal entering the node (14, 18, 24) be demultiplexed and that each wavelength or group of wavelengths be appropriately switched, then the resultant wavelengths at a given switch output port have to be remultiplexed into a new WDM stream for onward transmission. This means that the switch has four major aspects. They are:
1. It is a switch - it establishes service (wavelength) - level paths between inputs and outputs.
2. It is a network element. The switch nodes have to co-operate to set up an end-to-end path which requires some form of network intelligence, signaling and control. This may be centralized or may be distributed. There is a move away from centralized to distributed in the belief that this will permit a higher performance, more agile and responsive network. This implies less NM-to-switch communications and more switch-to-switch communications. In other words, the switches will become more autonomous network nodes.
3. It is a component within the photonic link budget. Photonic links are the optical paths between optical transmitters and optical receivers, which in this network may be separated by hundreds or thousands of kilometers, and may have switches in several places along their length. In order to ensure an error free data transfer over the photonic link, the optical receiver has to "see" received optical signals within a certain range of parameters, after the signal from the transmitter has traversed the optical path. This optical path has impairments introduced by the various elements along the path. In a switched all-optical network one of the network elements is the photonic switch, which, like other elements, introduces various impairments. Some of these may be similar to impairments introduced by other elements but some of them may be unique to the optical switch. One unique impairment introduced by the optical switch is its introduction of lambda by lambda level variations, both due to differing path losses in the switch (which has an analogy in the differing port losses in a WDM) and due to its mixing of multiple different input signals (wavelengths) from multiple unrelated WDM input signals into a common output WDM stream, thereby introducing a whole host of uncorrelated impairments on a wavelength-by-wavelength basis. These have to be at least somewhat compensated for at the per wavelength level. More on this later.
4. The photonic switch introduces a method of "randomly" changing the combinations of optical impairments between transmitters and receivers and changing transmitter/receiver relationships. Hence, a short path between a relatively local transmitter and a given receiver may suddenly be replaced by a path to that receiver that originates from a long distance, from a far transmitter. This can introduce problems in each of two areas:
   a) The individual receiver may receive an "out-of-spec" optical signal unless the link budget and link budget compensation components are rapidly changed.
   b) An overall sudden change in aggregate carrier power in a WDM stream may occur, for instance due to the sudden insertion of a very high power optical carrier, resulting in either overload/non-linear effects in the amplifiers and fiber or a sudden gain change in the amplifiers all of which may affect other in-traffic wavelengths on the same WDM stream.

For a successful implementation of a photonic switching node all of the four above aspects need to be addressed. We will return to these four points later. Before this we will establish a basic architecture for a photonic switching node and then examine how that architecture can be implemented/refined/modified to address 1 through 4 above.

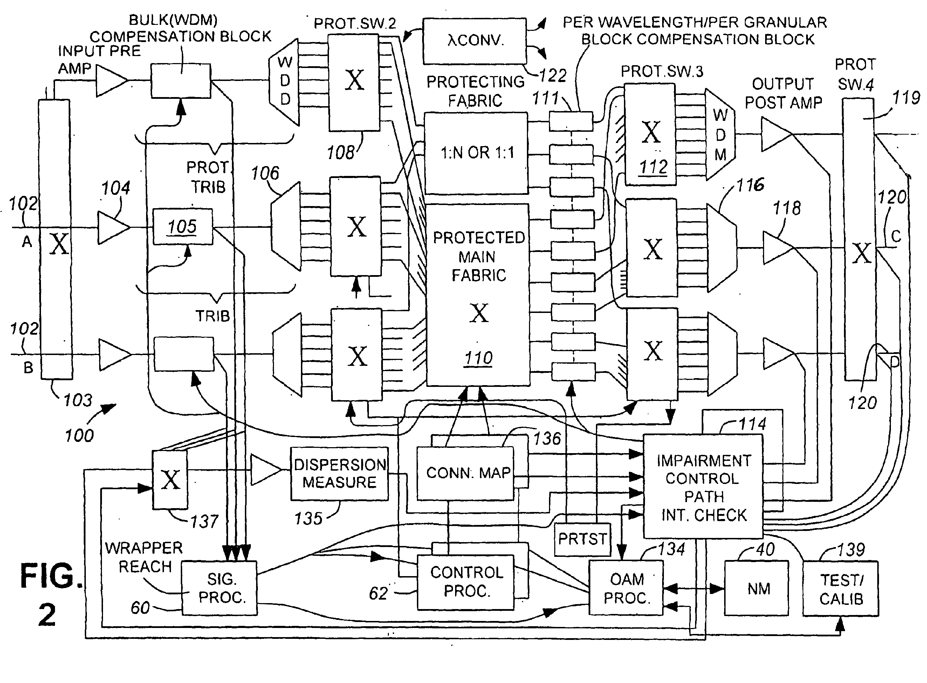

Referring to Fig. 2 there is illustrated a photonic node in accordance with an embodiment of the present invention.

The photonic node 100 includes N inputs for fiber 102, an optical amplifier 104, a demultiplexer 106, a first protection function 108, a photonic switch fabric 110, a second protection function 112, a channel impairment compensation function 114, a multiplexer 116, an optical amplifier 118, an output for fiber 120, and electro-optics device 122. Support functions include fast and slow line scanners, wrappers readers, connection comparison, channels performance monitors, OAM&P processor, a connection map 136 and a control processor 62.

In operation, the central optical switching core 110 provides an array or arrays of optical cross-points, to provide the actual switching of the optical path, which may be at the individual wavelength level, the wavelength group level or both. This core, comprising a protected main fabric and a 1:1 or 1:N protecting fabric, has a control system 62 to control it, an OAM/integrity system 134 to verify/manage the node, protecting elements to mitigate the effects of failures, input and output "line card" functions between an individual fiber 102, 120 and the switch core 110, a wavelength conversion and adddrop function 122, and compensation elements 114 to correct for optical impairments occurring in the switch or in the signals reaching the switch. The wavelength conversion function is provided to convert wavelengths that can no longer be propagated onwards due to "wavelength blocking", to regenerate optical signals that have been transmitted through too many impairments in reaching this node to permit them to be propagated onwards without "clean-up". We will now "walk through" the optical path through the switch and then cover off how this optical path is controlled, managed and verified. An incoming optical signal consisting of a multi-channel WDM feed enters the node at A. This signal may have traveled a long distance though many amplifiers, filters and switch nodes, thereby accumulating a large level of degradation or it may be relatively local (and hence clean) source. The signal enters the switch node by passing straight through a protection switch element (Protection Switch 1). The purpose of this protection switch element is to provide the line-side component of the per-fiber tributary protection switching function, the switch-core side tributary switching function being provided by changing the connection map of the main switch itself to pick up the feed from the protection tributary path.

The incoming signal at A, having passed through the Protection Switch 1 (103), passes through a bulk (WDM) compensation block (105). This optional block applies compensation to the overall WDM signal to reduce the variance between the impairments that exist on the multiple inputs of the switch. These impairments may include average optical power errors overall span-based or link-based chromatic dispersion and/or polarization mode dispersion. Because it is a bulk treatment of multiple wavelengths simultaneously it cannot provide random different per-wavelength corrections but it can reduce the overall variations between the inputs. Also, it cannot correct for impairments introduced in the switch itself. However, it can correct for certain impairments very effectively. These include removing/reducing chromatic dispersion and/or polarization mode dispersion arising on the incoming link, as far back as the last optical switch. It cannot reach back further than this because of the "randomizing" action of that last optical switch, even if that switch had also had a similar bulk compensator, due to variability or tolerance in the setting of the multiple compensators. Another purpose for the compensator is to adjust the overall power level of each WDM stream so each WDD 106 "sees" the same input power. Alternatively, this can be done by adjusting the amplifier gain. The key point however is that the compensator must be dynamically controlled in a control feedback loop, since the alternate sources of the various components that make up the WDM signal are random and changing.

The WDM multiplexed optical signal from the bulk compensation block, which now has a reduced range of chromatic dispersion error and/or overall power error, is now passed through the WDD 106 (wavelength division demultiplexer) component of the tributary card function. This breaks down (demultiplexes) the WDM optical signal into its component wavelengths or wavelength-group that match the switching granularity. Note that this can result in a multi-stage switching process, although a single stage process, is shown here.

The optical signal components, now at the granularity at which they will be switched, are output to the main switch fabric, from the WDD outputs 106, via a protection switch mechanism 108 (Protection Switch 2). This protection switch mechanism 108 provides the protection for failures of all (1:1 protection) or part (1:N protection) of the switch core. In general, if the main fabric 110 is a single stage, monolithic structure, then 1:1 protection switching is needed, whereas, if the switch core can be partitioned into similar, provisionable non-interdependent building blocks, then 1:N protection switching can be deployed. The protection switch 108 (Protection Switch 2) operates in conjunction with Protection Switch 3 (112) to bypass a failed main fabric/failed main fabric module, by re-routing the traffic to a protecting fabric or one or more protecting fabric modules. The optical signals are switched in the main fabric 110 and then output from that fabric. The output optical signals are passed through a series compensation blocks 111 which correct/reduce the range of impairments on a per-wavelength or per-wavelength group basis (depending up on the granularity of the switch), before being fed to the output WDM 116. These compensators operate under the control of a centralized Impairment Control Block 114, which may consist of a Power Spectrum Equalizer for amplitude control, as Chromatic Dispersion Equalizer, etc, and which may have shared functionality with the Switch Path Integrity Check system.

The output WDM 116 module combines the outputs from each of the switch ports that are destined for a given output fiber and there the WDM signal is output to line 120 via an optical post-amplifier 118 and an asymmetric power splitter, typically passing - 95% of the output out of the node to line and returning ~ 5% into the Impairment Control Block 114 is centralized and controls the per-granular element compensation arrays as well as the optional input bulk compensation arrays, a shared sophisticated scheme can be used to remove the vast majority of the optical impairments in the output optical signal, including the output WDM 114 and post-amplifier 118.

In the event that the main fabric 110 is functional, the individual optical signals at the switching granularity are passed to the main switch fabric for switching. Despite the operation of the bulk (WDM) compensation block 105, these signals will have differing impairments or a tolerance on their parameters, in their form as presented to the inputs to the fabric. These tolerances and/or impairments arise from:

### Amplitude of an optical carrier:

- Within a wavelength set from a given optical fiber
   - Non flat loss in the transmission path from the previous node
      - Line amplifiers
      - Fiber
   - Non-equal power per carrier launched from the previous node
   - Differing losses within this (local) node, mainly from the WDD.
- Between different input optical fiber
   - Differences in treatment of optical signals in different previous nodes.
   - Differences in the compensated overall power output from each of the input bulk compensation blocks
   - Differences between the non-flat losses (spectrally dependent losses) between the various incoming fiber routes.

### Chromatic Dispersion (and PMD)

- Within a wavelength set from a given fiber.
   - Errors in any wavelength dependency of the bulk compensator.
   - Residual chromatic dispersion from uncorrelated sources further upstream than the previous node, including the reduction of these effects, if any, in that node.
- Between fibers
- Errors/tolerance between the bulk compensation blocks.

These signals, along with the aforementioned impairments, are switched by the protected main fabric 110. This fabric contains an array of switching cross points, in a simple or quite complex topology, which operate under control of the control processor to set up the required connection paths. More on this control system later. The optical signals are switched through to main fabric output ports which correspond to the appropriate wavelength port on the appropriate output tributary card to connect to the correct output fiber 120. But these signals do not go straight through to the output WDM (wavelength division multiplexer) 116. Instead, they pass through a per wavelength / per granular element compensation block 111. This block removes/reduces the optical impairments that have randomly accumulated in the individual optical carriers (or will accumulate before they exit the switch). There are many more contributors to individual (per wavelength) variations in amplitude than there are for chromatic dispersion (since chromatic dispersion primarily occurs in the optical fiber, where all of the wavelengths are subject to a more-or-less similar degradation) and hence per wavelength amplitude compensation is of prime interest. However, since in a long system, errors will build up in the way the bulk compensators treat nori-spectrally flat chromatic dispersion, and we will mix signals from different chromatically dispersive (and differently compensated) paths, a need for per-wavelength chromatic dispersion is expected to arise, especially in ultra long haul systems. The sources of amplitude error (present at the output of the node, where the optical signal is sampled for analysis) that can be removed with the per wavelength compensation block include:
- Input impairments / amplitude differences from remote terminals or line systems.
- Non-flat gain in the input amplifier.
- Non-flat gain correction in the bulk compensation block.
- Input WDD non-flat losses or channel-channel variations.
- Different losses in the optical interconnect paths between the tributaries and the main fabric (the optical backplane), since the WDM modules and switch modules will require an optical interconnect between them.
- Non-flat losses through the non-activated protection switch elements, especially Protection Switch 2 (108) where the signals are traveling on different paths.
- Increased loss on the protecting switch path due to extra losses in Protection Switch 1, 2, 3, 4 (103, 108, 112, 114), when energized.
- Different losses for the various switch paths through the main fabric 110 (and through the protection fabric if energized).
- Differing losses on the different paths between the main switch fabric (110)/per wavelength compensation block 111 and the input to the WDM 114.
- The per channel loss variation of the WDM.
- Non-flat gain in the output post-amplifier.

By including a per-wavelength compensation element 111 with amplitude control in a feedback path, with the control based upon the power of each output carrier in the WDM optical stream at the output of the node, all the aforementioned sources of amplitude error can be reduced/eliminated to a level determined by the sensitivity and accuracy of the control system. The advantage is that we do not have to eliminate these impairments, just substantially attenuate them in order to build a very long system indeed. This is because any residual impairment in this actively compensated system will be seen as an impairment contribution in the next node downstream and will be further reduced.

The node 100 shown in Figure 2 has several other blocks and functions that will now be discussed.
The input WDM signal taps are used to feed a portion of the signal to an array of receivers in the input to the signaling processing block 60. This signaling processing block 60 extracts the per channel signaling in the wavelength wrapper in order to allow the incoming signals to request their own paths through the network. In order to facilitate signaling information recovery without a large array of very high speed receivers at the signaling extraction point, specific arrangements are made in the format of the wavelength wrapper. These allow the wrapper reader to use an array of lower bandwidth, line protocol/bit rate - independent (but not wrapper-data-rate independent) receivers that, being narrowband, are more sensitive and permit the use of asymmetric splitting of the optical signal at the input split point. The d.c. voltage level from these receivers provides a measure of the per-wavelength optical power (the wrapper reader consists of a WDD device and an array of low bandwidth receivers, although various scanning techniques can also be used, to reduce the equipment complexity). This d.c. voltage level is fed to the PSE in Impairment Control 114 and is used to set the gain/loss of the input amplitude controllers (amplifiers or attenuators). The extracted signaling information is passed to the control processor 62 and/or OAM processor 134. In this case it will be assumed that the wavelength wrapper covers channel is passed to the OAM processor 134, where it is decoded/demultiplexed, OAM information is retained and the signaling information is passed to the control processor 62, which, after suitable decision/processing, uses the data to update its connection map 136. Note that there are a large number of variations to the theme of self-threading networks and auto-discovering switch-nodes and it is not possible to cover them all here. The OAM processor 134 communicates with a Network Manager (NM) 40 covering a plurality of Switch Nodes and which provides the overall network control, integrity and provisioning functions. Thus, for node functions the OAM processor 134 communicates with the NM 40, and the information that the OAM processor 134 receives from the wavelength wrapper is primarily related to the quality, integrity, class of service/type of circuit of the wavelength contents, along with routing/origin/destination of that wavelength. Other blocks include the dispersion compensation measurement block and the calibration block 111.

The dispersion compensation measurements block 135 provides a qualitative measure of the dispersion on the incoming WDM signal at a specific wavelength or wavelengths. The purpose of this is to establish an approximate magnitude of the dispersion and an accurate assessment of the sign/polarity of the dispersion ("positive" or "negative" dispersion). This then allows incremental "negative" or "positive" dispersion to be added in the compensation block until the dispersion compensation measurement block can no longer reliably determine the sign of the dispersion. This centralized block can be shared over the various inputs and/or can also be used to assess the per wavelength dispersion errors at the output in order to drive per wavelength dispersion compensators.

The dispersion compensation measurement block 135 consists of an optical switch 137 to connect it to the appropriate fiber (input or output), feeding a low noise optical amplifier with a gain roughly equivalent to the loss in the splitter and switch, plus 6-7 dB. The output of the amplifier is fed into a WDD 106 and a switch selects one of the transmitted wavelengths and feeds it to a receiver via three alternating paths. One of these paths is a straight-through path, the other two go via dispersive media. One of the paths goes via a "positive" dispersive medium, most likely a coil of appropriate fiber, whilst the other path goes via an approximately equal end opposite "negative" dispersion medium, likely to be a coil of a different form of fiber (although other structures such as optical filters, "broken" Bragg gratings, etc. could also be used, with some limitations). The output of the receiver is fed to two band-bass filters, one centered at relatively low frequencies, the other at relatively high modulation frequencies (and may have to be adaptive-depending on the throughput signal). This arrangement allows us to measure the relative signal spectral intensity at high frequencies relative to low frequency. The high frequency spectral intensity is maximized when dispersion is zero so the three paths allow a measurement of the "sign" of the dispersion error (via the "positive", "negative" paths) and a confirmation of a true cancellation (by packing the center path without compensation). This can be done at one or a few wavelengths on the input to minimize the input bulk dispersion, and/or can be done on the output to reduce/eliminate the output dispersion. The next block is the Test/Calibration block 139. The Impairment Control 114 with its associated Dispersion Compensation measurement unit, Power Spectrum equalizer, etc. is a complex sub-system and could be a source of error/unreliability itself. Hence a Test/Calibration block 139 oversees its operation and provides an auto-calibration of its complex optical paths.

The monitor scanning options include:
- none - NxM parallel monitors dedicated to N lines and M channels per line
- line scanner - M parallel monitors dedicated to all M channels per selected line
- channel scanner - N parallel monitors dedicated to all N lines per selected channel number
- line & channel scanner - 1 monitor shared across all N lines and M channels per line.
Photonic switching and cross connect (PSX) protection options:
- 1:N
- duplicated, load shared node
- network restoration around a failed node
PSX compensation options:
- none, PSX specific, PSX and line specific
- level, level and dispersion
- transient, static and transient
- integrated or not
PSX integration options:
- fabric
- redundant fabric
- redundant fabric + compensation
- redundant fabric + compensation + filters
- redundant fabric + compensation + filters + amplifiers
- redundant fabric + compensation+ filters + amplifiers + monitoring

Per Channel Network Monitoring Options:
- trace - per channel connection verification
   - digital wrappers (fast, slow), pilot tones, correlation
- coarse signal quality for end-end & intermediate sites for fault location
   - optical signal analyzers
   - channel power, drift, OSNR, PDL
- accurate signal quality, diagnostics & dispersion compensation
   - Q monitor

Node cost reduction is achieved by PSXs in capital terms from less optical-to-electrical-to-optical (O/E/O) conversion, and from service platform interconnect with express wavelengths that bypass intermediate service platforms. PSX node cost reduction is also achieved in operations terms from density improvements (less space, power and cooling) and from less inventory and fewer layers of management. Related to operations cost reduction, is the service velocity driver that accrues from less O/E/O conversion which results in less per wavelength pre-provisioning and hence more rapid connection set-up. Also related to operations cost reduction, is the service flexibility driver that accrues from bit rate and protocol independence. This PSX characteristic results in tolerance to uncertainty by readily accommodating increasing service and line rates, and protocol diversity.

Long-reach optical systems capable of reaching upwards of 3000 km are soon reaching commercial deployment. In this long-reach environment, PSXs are needed to improve connection availability, to provide wavelength add/drop flexibility and low cost managed pass-through, and to improve fibre efficiency. Photonic switch technology itself is maturing rapidly, featuring greater scalability and reliability. PSXs are also becoming more manageable, especially when used as a complement to EXCs. In addition, significant strides are being made at the control layer in terms of proposals in various public forums for control architectures and for wavelength signaling and routing protocols, to enable flexible mesh networking for rapid connection setup and restoration.

When used with EXCs, the advantage is that the PSX node can have a large and loss-less fabric, and be wavelength non-blocking. It can also exploit electrical operation, administration, maintenance and provisioning (OAM&P) for management inside the electro-optics domain, and has no inter-working impact on optical line systems.

PSX applications can be expressed with regard to switch granularity, that is, switching at the fiber, wavelength-band, and wavelength levels.

Band and fiber switching involves the switching of groups of wavelengths through individual PSX ports. In fiber switching, a group consists of all the available wavelengths in a particular WDM system. In band switching, the groups are subsets of the available wavelengths, known as bands. Bands are used in WDM systems to enable optical filter modularity, resulting in performance improvements from less loss, and cost advantages. It is the all-optical nature of the PSX that enables the switching of a group of wavelengths as a single entity, a function that is not possible with EXCs.

Switching advantages are band and fiber switching are scalability, cost-reduction and less management complexity, all by containing numbers of ports and connections. As network traffic increases, it is possible to move from a wavelength switching scenario to switching bands, then fibers. This allows a PSX node to scale up to meet increasing traffic demands without the need to upgrade the PSX switch fabric. At the same time, this provides a dramatic reduction in the cost-per-bit of traffic through the switch. There is also the potential for substantial optical multiplexer and de-multiplexer cost savings by eliminating the need for wavelength breakout at intermediate PSX nodes. Finally, there is the potential for reducing the management complexity by managing multiple wavelengths between node pairs as a single entity.

The deployment of PSXs in optical networks must account for possible interactions between PSX nodes and optical line systems . One interaction concerns the impairments introduced by PSXs. The main PSX impairment is significant flat loss, as well as loss variations across the channels (wavelengths or wavelength bands) being switched by the PSX. PSX flat (e.g., fabric) loss should be limited so that it can be compensated for by flat gain (e.g., by the PSX input line pre-amplifiers in Fig. 2). This flat gain should not result in significant performance degradation in terms of SNR and non-linearity, nor in safety issues or in PSX component damage from high power.

PSX loss variations across channels stem from two sources. The first is from PSX imperfections, e.g., path length variations in the fabric. The second is from the nature of the PSX function (even if the PSX were perfect) of switching channels from among non-identically loss compensated input line systems, as well as from locally added signals with non-identical transmit levels (i.e., from the electro-optics device in Fig. 2). These loss variations will all appear at the PSX output, and need to be compensated before being launched into line systems so as to avoid degraded line system performance. This leads to a possible impairment compensation strategy where all line systems are impairment (loss and dispersion) compensated at (at least) their last amplifier before connecting to a PSX input, and where PSXs compensate for the specific PSX induced level variations noted above.

PSX functional, performance and sizing requirements include connection management and control, optical protection and restoration options, performance and fault management, and optical impairment compensation. Some of these requirements are implied in Fig. 2. Also, PSX impairment compensation and sizing requirements were outlined in previous sections. The following discusses certain other key requirements in more detail.

Performance monitoring in a PSX node has many purposes, including the support of network wide performance and fault management, and the triggering of network wide protection and restoration options. Performance monitoring in a PSX node also has more local purposes, including detection and isolation of PSX node specific faults and miss-connects, triggering protection switching to redundant modules where applicable, and potentially driving PSX output channel power level compensation. Self contained node detection and isolation of faults and miss-connects across a PSX node requires monitoring channel identification (ID) and signal quality at both PSX inputs and outputs. If only PSX inputs or outputs are monitored, there is a dependency on up- or down-stream nodes to detect and isolate faults and miss-connects across a given PSX node. To the degree that a PSX is in close proximity to electro-optics systems (e.g., see Figs. 1 and 2), self-contained node monitoring can be at least partly done by electro-optic systems. However, ultimately, optical monitoring capabilities are needed and are emerging for such parameters as channel drift, power, and optical SNR.

Further to the performance monitoring requirements outlined above, related follow-up node requirements are to switch to node protection modules where applicable, and report to the management system for service purposes the faults and miss-connects and whether any protection activity has cleared the trouble. Further related requirements are to report to the management system for repair purposes the isolation information, provide an in-service (near hitless) repair (module replacement) procedure, and - after repair - revert to node working modules where applicable.

These requirements imply a degree of node based redundancy for improved node reliability where necessary for services needing end-to-end connection availability of 99.999%. Alternatively, using spare capacity in the network is a node reliability option once a control plane is in place, which may be adequate for some services, e.g., for a best effort service overlay. Improved node reliability, where needed, may be 1:N, otherwise 1:1, e.g., full-size redundant PSX fabrics. Protection switching between fabrics can be at the fiber, band or wavelength level, depending on the PSX granularity, and can be via combinations of splitters and/or couplers and small switches (2x2 or 1x2). As noted earlier, PSX input gain can be exploited to compensate for these component losses. There is also the prospect of integrating or sharing these components for related monitoring, protection switching, and bridge and roll functions.

The bridge and roll function involves the transfer of traffic from one set of input/output PSX ports to another set. Examples are for switching to a protection fabric to facilitate fabric maintenance and repair, to upgrade - i.e., roll existing traffic onto a new fabric, and to consolidate - i.e., roll wavelengths into a wavelength-band or roll wavelength-bands into fibers. Bridge and roll is required to be in-service (i.e., near-hitless, analogous to current sub - 50 ms protection switching) - essentially non-service affecting to other traffic.

Digital wrappers and optical service channels (OSCs) in the optical world are analogous to the overhead and operations channels in the electrical SONET/SDH world. The SONET user (or connectivity) plane involves layered section, line and path overhead for monitoring path IDs, errors, and maintenance indicators to support connection trace, performance monitoring and fault location functions. Also, in the management plane, the SONET section data communication channel (DCC) enables remote software download, remote start and remote provisioning of network elements (NEs).

In the optical world, the connectivity plane involves layered optical termination, multiplex section and channels, where channels need to address wavelengths and wavelength-bands. Digital wrappers is an emerging standards approach at the channel level that allows monitoring by way of O/E conversion to determine channel IDs, errors, etc., analogous to SONET/SDH. This detailed level of channel monitoring is most likely needed at POP (inter-network, gateway, administrative hand-off) PSX sites, and can be done by subtending electro-optics (e.g., the EXCs in Figs. 1 to 2). This is especially true for terminating (add/drop) traffic at these sites, but also for traffic transiting these sites, since the hand-off is likely to be by way of O/E/O conversion until optical layer inter-working among different administrations is made possible. For optical pass-through traffic at intra-network hub PSX sites, a simpler alternative is optical pilots with channel IDs for connectivity verification, and optical spectrum analyzer OSA-like signal quality monitoring of channel drift, power, optical SNR and Q to support performance monitoring and fault location. However, a shared digital wrapper monitor could also be used at these sites.

In the optical world, the management and control plane requires OSCs that terminate at all line amplifier and PSX sites and are used to manage and control the optical network. Functions again include remote download, start, and provisioning of NEs, but also communicating channel routing and signaling information. As with SONET/SDH, control redundancy is required at both the optical node and network level, since there will be even more intelligence and network impact at stake with higher capacity optical networks with control plane functions.

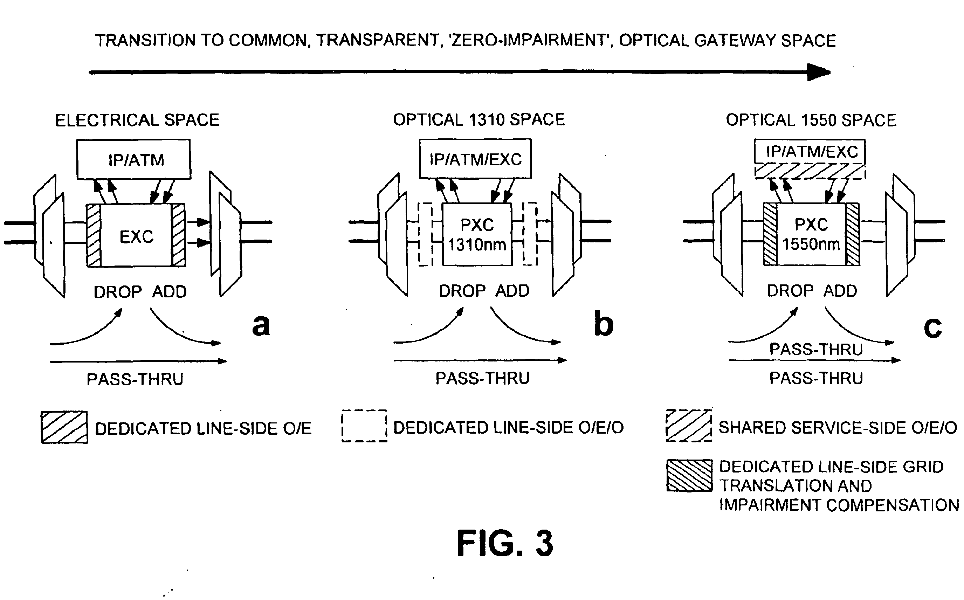

Referring to Fig. 3 there is illustrated a network node transitioning from an all electrical domain through a mixed electro-optical domain to an all optical domain, or photonic node.

The photonic node provides an optical gateway alternative for:
- concatenating multi-vendor line systems
- interconnecting multi-carrier networks
while interfacing with and leveraging the legacy and electro-optics world.

Today multi-vendor and multi-carrier interworking in hub and point-of-presence (POP) sites is via open electrical interfaces (e.g., DS3 signals) in the electrical world (Fig. 3(a)), and by open optical interfaces (e.g., 1310nm signals) in the optical world (Fig. 3(b)). In either case, this requires the relatively costly translation from optical-to-electrical-to-optical (O/E/O). This is necessary to date, given the complex nature of optical line and switching technologies, and the further complexity that would arise from interactions among them if optically interconnected without O/E/O conversion. For instance, optical line systems are complex by virtue of pushing the technology envelopes for simultaneous - high capacity, long-reach, performance, and low cost per bit. Similarly, photonic switches are struggling to achieve scalability, low loss and manageability. For these reasons of complexity and the need to control impairment and transient interactions, and facilitate interworking, these systems are currently being designed in 'isolation' - that is in a single vendor manner, and will likely be initially deployed in 'isolation' - that is with O/E/Os between them.

However, in the context of migrating to all-optical networks (Fig. 3(c)), it is desirable to eventually be able to more economically facilitate multi-vendor and multi-carrier interworking by optical means and without O/E/O conversion. Going forward, technology maturity will somewhat ease these interactions and inter-working difficulties. But, more relevant here is the prospect that these issues can be further mitigated by way of the photonic node taking on the role of a gateway function for multi-vendor and multi-carrier interworking. The basis of this gateway function is the photonic node as 'master' performance monitor and impairment compensator. Performance monitoring in a photonic node supports network wide performance and fault management, and the triggering of network wide protection and restoration options. It also supports detection and isolation of photonic node specific faults and miss-connects, triggering protection switching to redundant modules where applicable. Finally, and most relevant here, performance monitoring drives photonic node output channel power level compensation, and potentially, dispersion compensation. This compensation facilitates a common, transparent, 'zero-impairment', optical gateway space capable of concatenating multi-vendor line systems, and interconnecting multi-carrier networks. A photonic node also includes interfacing with, and leveraging the legacy and electro-optics world. For example, when a photonic is in close proximity to electro-optics systems, network and node monitoring of optical channels can be at least partly done by electro-optic systems.

Modifications, variations and adaptations to the embodiments of the invention described above are possible within the scope of the invention, which is defined by the claims.

## Claims

1. A photonic network node comprising:
a photonic switch fabric (110) including a main module and one or more redundant modules, for forwarding an optical signal comprising a plurality of channels;
means for monitoring (137,155,114) the optical signal before and after the photonic switch fabric (110);
means (108) for switching the plurality of channels of the optical signal between the main module and one of the redundant modules, responsive to the monitoring means;
means (105) for reducing a variance of signal impairments existing between input optical signals of the photonic network node, by applying a bulk compensation of signal characteristics to all channels of the optical signal;
means (106) for demultiplexing an optical signal inputs into channels;
means (111) for compensating channel impairment for each individual channel, responsive to the monitoring means; and
means (116) for multiplexing channels into an output optical signal.

2. A node as claimed in claim 1, wherein the photonic switch fabric (110) includes a plurality of optical switch planes.

3. A node as claimed in claim 1 or 2, wherein the means for demultiplexing (106) includes an 1:M demultiplexer.

4. A node as claimed in any preceding claim, wherein the means for monitoring includes fast line scanners.

5. A node as claimed in claim 4 wherein the fast line scanners couple prior to the means for demultiplexing.

6. A node as claimed in claim 4 wherein the fast line scanners couple after the means for multiplexing.

7. A node as claimed in any one of claims 1 to 3 wherein the means for monitoring includes slow line scanners.

8. A node as claimed in claim 7 wherein the slow line scanners couple prior to the means for demultiplexing.

9. A node as claimed in claim 7 wherein the slow line scanners couple after the means for multiplexing.

10. A node as claimed in any preceding claims, wherein the means for monitoring includes wrapper readers.

11. A node as claimed in any preceding claim, wherein the means for monitoring includes channels performance monitors.

12. A node as claimed in any preceding claim, wherein the means for multiplexing (116) includes an M:1 multiplexer.

13. A photonic node as claimed in any preceding claim, wherein the means for monitoring supports network wide performance and fault management, and the triggering of network wide protection and restoration options.

14. A photonic node as claimed in any preceding claim, wherein the means for monitoring includes means for triggering of network wide protection and restoration.

15. A photonic node as claimed in any preceding claim, wherein the means for monitoring includes means for detecting and isolating photonic node specific faults and mis-connects, and means for triggering protection switching to redundant modules when appropriate.

16. A photonic node as claimed in any preceding claim, wherein the means for monitoring includes photonic node output channel power level compensation responsive thereto.

17. A photonic node as claimed in any preceding claim, wherein the means for monitoring includes photonic node output channel dispersion compensation responsive thereto.

18. A photonic node as claimed in any preceding claim, further comprising means for interfacing with electrical signaling network nodes.

## Revendications

1. Un noeud de réseau photonique comprenant :
une structure de commutateur photonique (110) incluant un module principal et un ou plusieurs modules redondants, pour acheminer un signal optique comprenant une pluralité de canaux;
un moyen (137, 135, 114) pour contrôler le signal optique avant et après la structure de commutateur photonique (110);
un moyen (108) pour commuter la pluralité de canaux du signal optique entre le module principal et un des modules redondants, en réponse au moyen de contrôle;
un moyen (105) pour réduire une variance de dégradations de signal qui existent entre des signaux optiques d'entrée du noeud de réseau photonique, par l'application d'une compensation collective de caractéristiques de signal à tous les canaux du signal optique;
un moyen (106) pour démultiplexer des signaux optiques d'entrée en formant des canaux;
un moyen (111) pour compenser une dégradation de canal pour chaque canal individuel, en réponse au moyen de contrôle; et
un moyen (116) pour multiplexer des canaux en un signal optique de sortie.

2. Un noeud selon la revendication 1, dans lequel la structure de commutateur photonique (110) comprend une pluralité de plans de commutateur optique.

3. Un noeud selon la revendication 1 ou 2, dans lequel le moyen de démultiplexage (106) comprend un démultiplexeur 1:M.

4. Un noeud selon l'une quelconque des revendications précédentes, dans lequel le moyen de contrôle comprend des analyseurs de lignes rapides.

5. Un noeud selon la revendication 4, dans lequel les analyseurs de lignes rapides sont couplés avant le moyen de démultiplexage.

6. Un noeud selon la revendication 4, dans lequel les analyseurs de lignes rapides sont couplés après le moyen de multiplexage.

7. Un noeud selon l'une quelconque des revendications 1 à 3, dans lequel le moyen de contrôle comprend des analyseurs de lignes lents.

8. Un noeud selon la revendication 7, dans lequel les analyseurs de lignes lents sont couplés avant le moyen de démultiplexage.

9. Un noeud selon la revendication 7, dans lequel les analyseurs de lignes lents sont couplés après le moyen de multiplexage.

10. Un noeud selon l'une quelconque des revendications précédentes, dans lequel le moyen de contrôle comprend des lecteurs d'enveloppes.

11. Un noeud selon l'une quelconque des revendications précédentes, dans lequel le moyen de contrôle comprend des dispositifs de contrôle de performances de canaux.

12. Un noeud selon l'une quelconque des revendications précédentes, dans lequel le moyen de multiplexage (116) comprend un multiplexeur M:1.

13. Un noeud photonique selon l'une quelconque des revendications précédentes, dans lequel le moyen de contrôle assure la gestion de performances et de défauts dans l'ensemble du réseau, et la mise en oeuvre d'options de protection et de restauration dans l'ensemble du réseau.

14. Un noeud photonique selon l'une quelconque des revendications précédentes, dans lequel le moyen de contrôle comprend un moyen pour déclencher des actions de protection et de restauration dans l'ensemble du réseau.

15. Un noeud photonique selon l'une quelconque des revendications précédentes, dans lequel le moyen de contrôle comprend un moyen pour détecter et isoler des défauts spécifiques à un noeud photonique et des mauvaises connexions, et un moyen pour déclencher une commutation de protection vers des modules redondants lorsque c'est approprié.

16. Un noeud photonique selon l'une quelconque des revendications précédentes, dans lequel le moyen de contrôle comprend, en réponse, une compensation de niveau de puissance de canal de sortie de noeud photonique.

17. Un noeud photonique selon l'une quelconque des revendications précédentes, dans lequel le moyen de contrôle comprend, en réponse, une compensation de dispersion de canal de sortie de noeud photonique.

18. Un noeud photonique selon l'une quelconque des revendications précédentes, comprenant en outre un moyen pour assurer l'interface avec des noeuds de réseau à signalisation électrique.

## Patentansprüche

1. Optischer Netzwerk-Knoten mit:
einer optischen Vermitttungsstruktur (110), die ein Hauptmodul und ein oder mehrere redundante Module einschließt, zum Weiterleiten eines optischen Signals, das eine Vielzahl von Kanälen umfasst;
Einrichtungen zur Überwachung (137, 135, 114) des optischen Signals vor und nach der optischen Vermittlungsstruktur (110);
Einrichtungen (108) zum Vermitteln einer Vielzahl von Kanälen des optischen Signals zwischen dem Hauptmodul und einem der redundanten Module in Abhängigkeit von den Überwachungseinrichtungen;
Einrichtungen (105) zur Verringerung einer Veränderlichkeit von Signalbeeinträchtigungen, die zwischen optischen Eingangssignalen des optischen Netzwerk-Knoten existieren, durch Anwenden einer Summen-Kompensation der Signal-Charakteristiken auf alle Kanäle des optischen Signals;
Einrichtungen (106) zum Demultiplexieren eines optischen Signaleingangs in Kanäle;
Einrichtungen (111) zum Kompensieren von Kanalbeeinträchtigungen für jeden einzelnen Kanal in Abhängigkeit von den Überwachungseinrichtungen; und
Einrichtungen (116) zum Multiplexieren von Kanälen in ein optisches Ausgangssignal.

2. Knoten nach Anspruch 1, bei dem die optische Vermittlungsstruktur (110) eine Mehrzahl von optischen Vermittlungsebenen einschließt.

3. Knoten nach Anspruch 1 oder 2, bei dem die Einrichtung zum Demultiplexieren (106) einen 1:M Demultiplexer einschließt.

4. Knoten nach einem der vorhergehenden Ansprüche, bei dem die Einrichtung zur Überwachung schnelle Leitungsabtasteinrichtungen einschließt.

5. Knoten nach Anspruch 4, bei dem die schnellen Leitungsabtasteinrichtungen vor den Einrichtungen zum Demultiplexieren angekoppelt sind.

6. Knoten nach Anspruch 4, bei dem die schnellen Leitungsabtasteinrichtungen nach den Einrichtungen zum Multiplexieren angekoppelt sind.

7. Knoten nach einem der Ansprüche 1 bis 3, bei dem die Einrichtungen zur Überwachung langsame Leitungsabtasteinrichtungen einschließt.

8. Knoten nach Anspruch 7, bei dem die langsamen Leitungsabtasteinrichtungen vor den Einrichtungen zum Demultiplexieren angekoppelt sind.

9. Knoten nach Anspruch 7, bei dem die langsamen Leitungsabtasteinrichtungen nach den Einrichtungen zum Multiplexieren angekoppelt sind.

10. Knoten nach einem der vorhergehenden Ansprüchen, bei dem die Einrichtung zur Überwachung Wrapper-Leser einschließt.

11. Knoten nach einem der vorhergehenden Ansprüche, bei dem die Einrichtung zur Überwachung Kanal-Betriebsverhalten-Überwachungseinrichtungen einschließt.

12. Knoten nach einem der vorhergehenden Ansprüche, bei dem die Einrichtung zum Multiplexieren (116) einen 1:M Multiplexer einschließt.

13. Optischer Knoten nach einem der vorhergehenden Ansprüche, bei dem die Einrichtung zur Überwachung eine netzwerkweite Betriebsverhalten- und Fehlerverwaltung und das Auslösen von netzwerkweiten Schutz und Wiederherstellungs-Optionen unterstützt.

14. Optischer Knoten nach einem der vorhergehenden Ansprüche, bei dem die Einrichtung zur Überwachung Einrichtungen zum Auslösen eines netzwerkweiten Schutzes und einer Wiederherstellung einschließt.

15. Optischer Knoten nach einem der vorhergehenden Ansprüche, bei dem die Einrichtung zur Überwachung Einrichtungen zur Feststellung und Isolation von für den optischen Knoten spezifischen Fehlern und Fehlverbindungen und Einrichtungen zum Auslösen einer Schutzumschaltung auf redundante Module, falls passend, einschließt.

16. Optischer Knoten nach einem der vorhergehenden Ansprüche, bei dem die Einrichtung zur Überwachung eine Ausgangskanal-Leistungspegel-Kompensation des optischen Knotens in Abhängigkeit hiervon einschließt.

17. Optischer Knoten nach einem der vorhergehenden Ansprüche, bei dem die Einrichtung zur Überwachung eine Dispersionskompensation des Ausgangskanals des optischen Knotens in Abhängigkeit hiervon einschließt.

18. Optischer Knoten nach einem der vorhergehenden Ansprüche, der weiterhin Einrichtungen zur Schnittstellenverbindung mit elektrischen Signalisierungs-Netzwerk-Knoten einschließt.
